# EUROPEAN PATENT APPLICATION

(11) **EP 2 738 050 A2**
(43) Date of publication of application: **04.06.2014**
(21) Application number: 13193894.6
(22) Date of filing: 21.11.2013
(51) Int. Cl.: B60R 25/24, B60R 16/037

(54) **Safety arrangement and a method in association with the safety arrangement**

(30) Priority: 29.11.2012 SE 1251352
(71) Applicant: Scania CV AB (publ), 151 87 Södertälje (SE)
(72) Inventor: Ricknäs, Daniel, SE-116 64 STOCKHOLM (SE)

(57) **Abstract**

A safety arrangement (2) for a vehicle (4), the vehicle comprises at least one functional unit (6) arranged at the vehicle and adapted to carry out a task, whereby each functional unit (6) is adapted to be in one of at least two conditions, at least one active functional condition when the functional unit carries out its task, and a condition for driving when the functional unit is in a condition in which the vehicle may be driven. The safety arrangement (2) is adapted to detect a restoration activity (8) and, depending on the restoration activity (8) that has been detected, to emit one or several restoration signals (10) adapted to be applied to the said one or several functional units (6), whereby the said one or several restoration signal (10) comprises or comprise control instructions such that all functional units (6) of the vehicle are set into the said condition for driving.

## Description

### Technical area

The present invention relates to a safety arrangement and a method for vehicles, according to the preambles to the independent claims.
To be more specific, the present invention relates to a function that makes it easier and safer for the driver to prepare a vehicle for driving after the vehicle has been used for a task.

### Background to the invention

Lorries are today often adapted for a special purpose or a specified task that is to be carried out. This adaptation is often constituted by providing the lorry with some form of supplementary structure. The lorry may be provided with, for example, a crane such that it can load and unload timber or other freight, or it may be provided with pump equipment for the cleaning of a drain, or it may be provided with concrete-handling equipment, etc. In association with the execution of these tasks, a number of settings for the vehicle must be carried out by the driver.
For example, the work illumination is to be switched on, the lorry is to be raised and possibly also stabilised through the influence of a damper system, the power outlet must be activated to a level that is adapted to the equipment that is to be used, the rate of revolution of the lorry may have to be increased, etc.
The units that must be adjusted will be referred to below as "functional units". This term may refer not only to the actual supplementary structures (such as the crane), but also equipment of the vehicle (such as dampers or illumination).

These various functional units are activated separately, often by activation units that are located at different locations of the vehicle, by the driver, depending on the circumstances that are currently prevalent and on the choice of equipment that is to be used. The activation units may be, for example, arranged on the instrument panel, at the steering wheel, on a remote-control unit for, for example, the dampers, on the vehicle key, etc.

The functional units are subsequently ready to be used and the relevant work operation, such as loading timber or cleaning a drain, can be carried out.

When the work operation has been completed, all of these functional units are to be restored to what is known as a "drive condition", i.e. a condition that they are to have when the vehicle is being driven normally. The work illumination, for example, must be extinguished, the dampers restored, the idling rate of revolution adjusted to its normal value, the power outlet switched off, the driver's cabin unlocked, etc.

This is often a complicated and time-consuming procedure, and there is, therefore, a risk that the driver will forget to restore one of the functional units, and this may compromise safety during normal driving.

A number of solutions are available within the relevant technical field, which solutions relate to functions and systems that, for example, remember the settings of a driver, in particular solutions in which several functions can be reached by one activity.

EP-0957016 describes a control and memory function that is present in a car key. The function can control whether certain equipment that is present in the car can start or not.

US-2006/0195483 describes a method to adjust user-specific values or parameters in a vehicle and to save these settings in a memory. The memory may be present either inside or outside of the vehicle. This prevents that driver having to use time unnecessarily in resetting various settings before departure.

US 6,741,920 concerns a car key that can store user settings in a memory. Depending on how the key is inserted, either a first or a second set of user settings is implemented.

US 2004/0158373 describes a function that saves information concerning how the steering wheel, seat and mirrors are set for a particular driver. This is carried out in order to save time for the driver, who does not have to make these settings again before the vehicle is driven.

In the light of the discussion above that describes how it is time-consuming to make the vehicle ready to be driven after the use of a functional unit, the object of the present invention is to simplify the restoration of the functional units, while at the same time ensuring that the functional units have been correctly restored when normal driving of the vehicle is to take place, which increases safety.

### Summary of the invention

The object stated above is achieved with the invention defined by the independent patent claims.

Preferred embodiments are defined by the non-independent claims.

According to the present invention, a safety arrangement is arranged that is adapted such that it is possible to restore with a single action the activated functional units to a predetermined condition for driving, i.e. a condition that has been defined and that does not have any influence on the vehicle when it is driven normally.

According to one embodiment, the safety arrangement is adapted to receive a restoring activity and as a response to this to generate restoration signals to all functional units, whereby the restoration signal comprises control instructions that set all functional units into the predetermined condition for driving.

According to a further embodiment, the safety arrangement comprises a regulator unit with a memory adapted to store the conditions for driving for all functional units and to store information about which ones are active. When a restoration signal is received, the regulator unit is adapted to generate restoration signals that are supplied to the active functional units and that contain control instructions that set the active functional units into the predetermined condition for driving.

A number of advantages are achieved through the invention. The driver will save a great deal of time since he or she does not need to manually set the functional units into their condition for driving. Furthermore, safety is increased since the application of the invention ensures that all functional units are in a condition for driving when the vehicle is to be driven away. It may happen, for example, that the driver has forgotten to extinguish working illumination and this leads to the risk that he or she drives the vehicle in a forbidden manner. This is prevented with this invention.

### Brief description of drawings

Figure 1 is a schematic drawing that shows a vehicle comprising a safety arrangement according to the present invention.
Figure 2 is a block diagram that illustrates schematically the safety arrangement according to the present invention.
Figure 3 is a block diagram that illustrates schematically an embodiment of the safety arrangement according to the present invention.
Figure 4 is a block diagram that illustrates schematically a further embodiment of the safety arrangement according to the present invention.
Figure 5 is a flow diagram that illustrates schematically the method according to the present invention.

### Detailed description of preferred embodiments of the invention

The invention will be described in detail below with reference to the attached drawings.

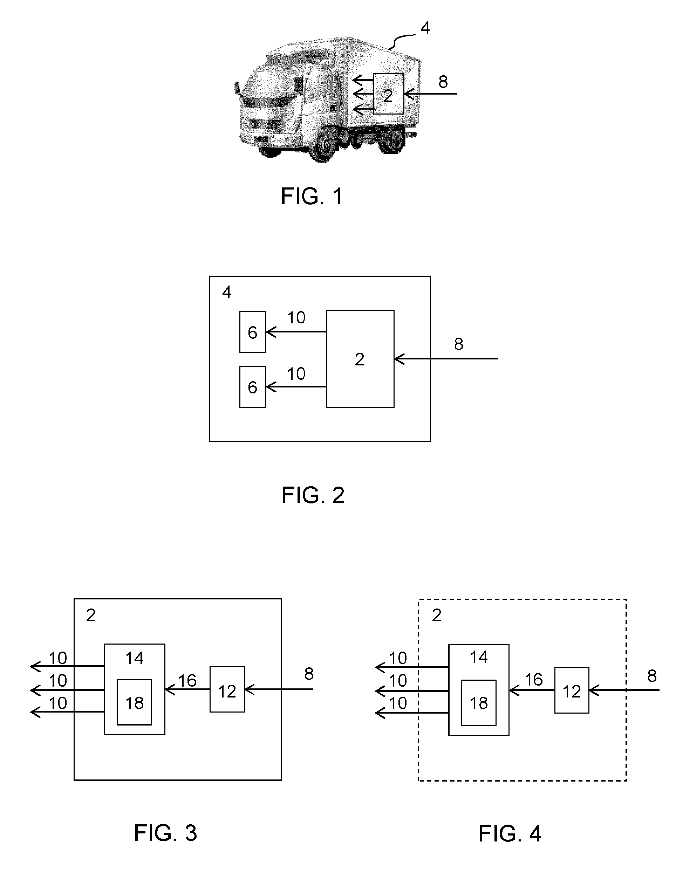

With reference first to Figure 1, which shows a schematic drawing of a vehicle comprising a safety arrangement according to the invention:

The invention concerns a safety arrangement 2 for a vehicle 4, where the vehicle comprises at least one functional unit 6 (see Figure 2) arranged at the vehicle and adapted to carry out a task. Each functional unit 6 is adapted to be in one of at least two conditions, at least one active functional condition when the functional unit carries out its task, and a condition for driving when the functional unit is in a condition in which it is permitted to drive the vehicle.

A condition for driving of a functional unit is, thus, a condition or a setting for the functional unit that has been predetermined, in association, for example, with the mounting of the functional unit, and it is a setting that it should not be possible for the user (the driver) to influence. As has been mentioned above, the condition for driving may be that working illumination is in the "extinguished" condition, that the rate of revolution of an engine lies within a determined range, or that a lifting crane is in its withdrawn condition.

As has been mentioned above in the introduction, the term "functional unit" is intended to denote various forms of supplementary structure on the vehicle, for example a crane for the loading and unloading of timber or other freight; or pumping equipment for the cleaning of drains; or equipment for the handling of concrete, etc. In association with these functional units carrying out their tasks, a number of settings for the vehicle must be carried out by the driver.
For example, the work illumination is to be switched on, the lorry is to be raised and possibly also stabilised through the influence of a damper system, the power outlet must be activated to a level that is adapted to the equipment that is to be used, the rate of revolution of the lorry may have to be increased, etc.
Thus, in the present application the term "functional unit" is used to denote not only the actual supplementary structures (such as the crane), but also equipment of the vehicle (such as dampers and illumination).

According to the invention, the safety arrangement 2 is adapted to detect a restoration activity 8 and to emit, depending on the restoration activity that has been detected, one or several restoration signals 10 (see Figures 2-4) adapted to be applied to the said one or several functional units 6. The restoration signal or restoration signals 10 comprise such control instructions that all functional units 6 of the vehicle are set into the said conditions for driving.

According to one embodiment, the safety arrangement 2 is adapted to emit restoration signals 10 to all functional units 6, when a restoration activity 8 has been detected.

According to a further embodiment, the safety arrangement 2 is adapted to emit restoration signals 10 only to those functional units 6 that are not in a condition for driving, when a restoration activity 8 has been detected.

An embodiment of the safety arrangement 2 will be described with reference to Figure 3.
The safety arrangement 2 comprises a restoration unit 12 and a regulator unit 14. The restoration unit 12 is adapted to detect a restoration activity 8 and to generate a restoration activity signal 16, depending on the restoration activity that has been detected. The restoration activity signal 16 is adapted to be applied to the regulator unit 14, which is, in turn, adapted such that it generates, when a restoration activity signal 16 has been received, the said one or several restoration signals 10.

According to one embodiment, the safety arrangement 2 is mounted on the vehicle 4. It may be mounted, for example, on the outside of the vehicle in association with the location at which the functional unit is arranged. According to a further example, it may be mounted inside the vehicle on the instrument panel.

According to a further embodiment, the safety arrangement 2 is a separate unit in the form of, for example, a hand-held battery-powered unit that emits, preferably in a wireless manner, restoration signals to the functional units. According to one embodiment, the restoration unit 12 is mounted in association with the safety arrangement 2. It may be constituted by, for example, a button or a lever that is activated by depressing the button of setting the lever into a "restoration position". Thus, the restoration activity is constituted by influencing the restoration unit such that it generates a restoration activity signal.

According to a further embodiment, the restoration unit 12 is instead a separate unit from the safety arrangement 2 - this embodiment is illustrated in Figure 4. The restoration unit may be constituted by, for example, a small hand-held unit that is adapted to generate a wireless restoration activity signal that is received by the regulator unit 14. The vehicle key, for example, may be provided with a functionality corresponding to that of the restoration unit, which can then be activated by depressing a predefined button on the vehicle key.

In the memory 18 that is arranged in the regulator unit 14, there is preferably stored, among other things, information about which functional units are arranged on the vehicle and which control instructions are required in order to set any one functional unit into its condition for driving.
According to one embodiment, the memory 18 is adapted to store information concerning the current condition of the functional units 6 of the vehicle.

It is the case for all of the embodiments described above that one or several of the said restoration signals can be transferred in a wireless manner. It is, of course, possible that, according to one embodiment, the restoration signals to one or several of the functional units are transferred either by suitable cables or by the data bus system of the vehicle, or by both suitable cables and by the data bus system of the vehicle.

In order to increase safety further, a functionality can be added that means that the vehicle cannot be driven unless all functional units are in their condition for driving.

The present invention concerns also a vehicle 4, for example a lorry, a work vehicle, a bus, etc., comprising one or several functional units 6 of the type that has been described above. The vehicle comprises a safety arrangement 2 according to the description above, and that each one of the functional units 6 is adapted to receive a restoration signal 10 and to set the functional unit 6 into the predetermined condition for driving when a restoration signal 10 has been received.

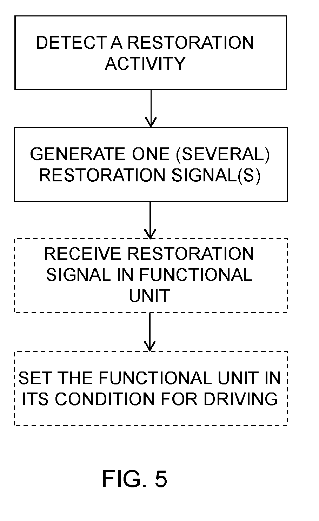

A method according to the present invention will now be described with reference to the flow diagram in Figure 5. The method is intended to be used in association with a safety arrangement for a vehicle.

The method is adapted to be used for a vehicle that comprises at least one functional unit arranged at the vehicle and adapted to carry out a task. Each functional unit is adapted to be in one of at least two conditions, at least one active functional condition when the functional unit carries out its task, and a condition for driving when the functional unit is in a condition in which it is possible to drive the vehicle. The method comprises:
- to detect a restoration activity;
- to emit one or several restoration signals comprising control instructions to set the said functional units of the vehicle into their said condition for driving.
According to one embodiment, restoration signals are emitted to all functional units, depending on the restoration activity that has been detected, i.e. independently of the condition in which the particular functional unit is.

According to a further embodiment, restoration signals are emitted only to those functional units that are not in a condition for driving, depending on the restoration activity that has been detected.

As has been described above, the safety arrangement comprises a restoration unit and a regulator unit. According to one embodiment of the method, the restoration unit is adapted to detect a restoration activity and to generate a restoration activity signal, depending on the restoration activity that has been detected. The restoration activity signal is subsequently adapted to be applied to the regulator unit, and that the regulator unit is, in turn, adapted such that it generates, when a restoration activity signal has been received, the said one or several restoration signals.

Furthermore, the regulator unit comprises a memory adapted to store the conditions for driving of all functional units and that the memory preferably is adapted to store information with respect to the current conditions of the said functional units. In order to avoid unnecessary repetition, the description above of the regulator unit and the memory is here referred to.

According to a further embodiment, the method comprises further:
- to receive the said restoration signal in a functional unit,
- to set the functional unit into the said predetermined condition for driving.

These steps of the method have been specified within squares drawn with dashed lines in the flow diagram in Figure 5.

The invention concerns also a software product comprising software instructions that are configured to carry out the steps according to the method that has been described above, when the software instructions are run on a computer system, whereby the software product can be read by a computer.

The present invention is not limit to the preferred embodiments described above. Various alternatives, modifications and equivalents can be used. The embodiments are, therefore, not to be considered as limiting the protective scope of the invention, which is defined by the attached patent claims.

## Claims

1. A safety arrangement (2) for a vehicle (4), the vehicle comprises at least one functional unit (6) arranged at the vehicle and adapted to carry out a task, whereby each functional unit (6) is adapted to be in one of at least two conditions, at least one active functional condition when the functional unit carries out its task, and a condition for driving when the functional unit is in a condition in which the vehicle may be driven,
**characterised in that** the safety arrangement (2) is adapted to detect a restoration activity (8) and, depending on the restoration activity (8) that has been detected, emit one or several restoration signals (10) adapted to be applied to the said one or several functional units (6), whereby the said one or several restoration signals (10) comprise control instructions such that all functional units (6) of the vehicle are set into the said condition for driving, furthermore, the safety arrangement (2) comprises a restoration unit (12) that is constituted by a button or lever, and a regulator unit (14), the restoration unit (12) is adapted to detect the said restoration activity (8) and to generate a restoration activity signal (16) depending on the restoration activity (8) that has been detected, which restoration activity signal (16) is adapted to be applied to the said regulator unit (14), and that the said regulator unit (14) is adapted to generate, when a restoration activity signal (16) has been received, the said one or several restoration signals (10).

2. The safety arrangement (2) according to claim 1, whereby the safety arrangement (2) is adapted to emit restoration signals (10) to all functional units (6), depending on the restoration activity (8) that has been detected.

3. The safety arrangement (2) according to claim 1, whereby the safety arrangement (2) is adapted to emit restoration signals (10) to the functional units (6) that are not in a condition for driving, depending on the restoration activity (8) that has been detected.

4. The safety arrangement (2) according to any one of claims 1-3, whereby the said regulator unit (14) comprises a memory (18) adapted to store the conditions for driving of all functional units (6).

5. The safety arrangement (2) according to claim 4, whereby the said memory (18) is adapted to store information concerning the current conditions of the said functional units (6).

6. The safety arrangement (2) according to any one of claims 1-5, whereby the said safety arrangement (2) is mounted at the vehicle (4).

7. The safety arrangement (2) according to any one of claims 1-6, whereby the said safety arrangement (2) is a separate unit.

8. The safety arrangement (2) according to any one of claims 1-7, when depending on claim 4, whereby the said restoration unit (12) is mounted in association with the safety arrangement (2).

9. The safety arrangement (2) according to any one of claims 1-8, when depending on claim 4, whereby the said restoration unit (12) is a separate unit.

10. The safety arrangement (2) according to any one of claims 1-9, whereby one or several of the said restoration signals (10) is or are adapted to be transferred in a wireless manner.

11. A vehicle (4) comprising one or several functional units (6), whereby the vehicle comprises a safety arrangement (2) according to any one of claims 1-10, and that each one of the said one or several functional units (6) is adapted to receive the said restoration signal (10) and to set the functional unit (6) into the said predetermined condition for driving when a restoration signal (10) has been received.

12. A method in association with a safety arrangement for a vehicle, the vehicle comprising at least one functional unit arranged at the vehicle and adapted to carry out a task, whereby each functional unit is adapted to be in one of at least two conditions, at least one active functional condition when the functional unit carries out its task, and a condition for driving when the functional unit is in a condition in which the vehicle may be driven,
**characterised in that** the method comprises:
- to detect a restoration activity;
- to emit one or several restoration signals comprising control instructions to set the said functional units of the vehicle into their said condition for driving, furthermore, the safety arrangement comprises a restoration unit, which is constituted by a button or a lever, and a regulator unit, the restoration unit is adapted to detect the said restoration activity and to generate the said restoration activity signal depending on the restoration activity that has been detected, which restoration activity signal is adapted to be applied to the said regulator unit, and that the said regulator unit is adapted to generate, when a restoration activity signal has been received, the said one or several restoration signals.

13. The method according to claim 12, whereby the method comprises to emit restoration signals to all functional units depending on the restoration activity that has been detected.

14. The method according to claim 12, whereby the method comprises to emit restoration signals to those functional units that are not in their condition for driving, depending on the restoration activity that has been detected.

15. The method according to claims 12-14, whereby the said regulator unit comprises a memory adapted to store the conditions for driving of all functional units.

16. The method according to claims 12-15, whereby the said memory is adapted to store information concerning the current conditions of the said functional units.

17. The method according to any one of claims 12-16, whereby one or several of the said restoration signals is adapted to be transferred in a wireless manner.

18. The method according to any one of claims 12-17, whereby the method further comprises:
- to receive the said restoration signal in a functional unit,
- to set the functional unit into the said predetermined condition for driving.

19. A software product comprising software instructions that are configured to carry out the steps according to the method according to any one of claims 12-18, when the software instructions are run on a computer system, whereby the software product can be read by a computer.
